# EUROPEAN PATENT APPLICATION

(11) **EP 3 095 837 A1**
(43) Date of publication of application: **23.11.2016**
(21) Application number: 16166404.0
(22) Date of filing: 21.04.2016
(51) Int. Cl.: C10B 47/30, C10B 47/40, C10B 53/00, C10B 19/00, C10L 9/08

(54) **A METHOD OF DRYING AND PYROLYZING MATERIALS**

(30) Priority: 22.05.2015 CN 201510265340
(71) Applicant: Chengdu En-shain Technology Incorporation, Chengdu Sichuan (CN); Nanjing SanLe Microwave Technology Development Co. LTD, Nanjing Jiangsu (CN)
(72) Inventor: Lan, Dapeng, Chengdu, Sichuan (CN); Xi, Weilin, Nanjing Jiangsu (CN); Liu, Lin, Chengdu Sichuan (CN); Yang, Qi, Nanjing Jiangsu (CN); Wu, Yue, Chengdu Sichuan (CN); Wang, Yong, Nanjing Jiangsu (CN); Cheng, Minglong, Chengdu Sichuan (CN); Zheng, Yingqi, Nanjing Jiangsu (CN); Jiang, Ming, Chengdu Sichuan (CN); Mao, Jiaojie, Nanjing Jiangsu (CN); Huang, Jianbo, Chengdu Sichuan (CN); Zhang, Weiyan, Nanjing Jiangsu (CN)
(74) Representative: Evans, Huw David Duncan

(57) **Abstract**

A method of drying and pyrolyzing material, including the following steps: sending the material into rotary kettle; making use of the microwave energy to heat the materials within the rotary kettle to pyrolyze and decompose the material in order to get decomposed gas and solid substance; condensing and recycling the gas generated from the decomposing; recycling and disposing the solid substance generated from the pyrolyzing. The method of this invention makes use of the microwave energy to rapidly heat the material inside the rotary kettle, and rotates the rotary kettle at the same time to make the material more uniformly heated, improve the material pyrolyzing efficiency, which can greatly improve the pyrolyzing and separating efficiency of the material and effectively reduce the energy consumption, with the improvement of the safety performance of the equipment operation. In the meanwhile, it also avoids the secondary pollution to the environment caused by the burning of the heating energy, thus effectively improves the economic and social benefits.(Fig.1)

## Description

This invention relates to a method of drying and pyrolyzing materials, mainly used for the drying and pyrolyzing, separating and extracting of material generated in drilling.

A rotary furnace is a common equipment for material drying, and currently the rotary furnace used for material drying mainly makes use of the conventional energy such as electricity, coal, and gas, etc., to conduct external heating of the rotary kettle on the rotary furnace thus to raise the temperature of the material inside the kettle for final extracting and separating. Conventional energy has some of the following disadvantages: low thermal conversion efficiency, low time efficiency, high energy consumption, and the emission after the combustion of conventional energy will cause secondary pollution to the environment. The rotary furnace using conventional energy, due to the low heat utilization efficiency, results in low drying treatment ability, which usually is 1 m³ per hour or so.

When disposing oil-containing and water-containing drilling cuttings generated in oilfield exploitation, the disadvantages of the rotary furnace that uses conventional energy, such as low treating capacity, open fire with a large security risk, etc. will be especially prominent, especially with the excessive mining of shale gas, the drilling waste generated like oil-based rock debris significantly increases, and in the exploitting and de-oiling process of oil sands mine at home and abroad, so far there has been no high efficiency and low energy consumption technology for oil removal, nor corresponding pyrolyzing and separating process equipment.

The purpose of the present invention is to provide a material drying and pyrolyzing method, which can greatly improve the efficiency of pyrolyzing and separating process, effectively reduce the energy consumption and reduce the secondary pollution to the environment.

To achieve the above purpose, the technical scheme taken in an embodiment of the invention is, including the following steps:
sending the material into the rotary kettle;
making use of the microwave energy to heat the materials within the rotary kettle to pyrolyze and decompose the material, in order to get decomposed gas and solid substance;
condensing and recycling the gas generated from the decomposing;
recycling and disposing the solid substance generated from the pyrolyzing.

Beneficial effects achieved from the method of this invention are:
Making use of the microwave energy to rapidly heat the material inside the rotary kettle, and rotate the rotary kettle at the same time, to make the material more uniformly heated, improve the material pyrolyzing efficiency, which can greatly improve the pyrolyzing and separating efficiency of the material and effectively reduce the energy consumption, with the improvement of the safety performance of the equipment operation; in the meanwhile, it also avoids the secondary pollution to the environment caused by the burning of the heating energy, thus effectively improves the economic and social benefits.

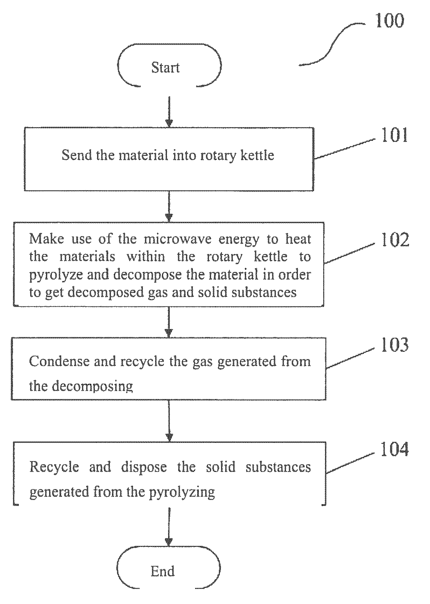

An embodiment of the present invention will now be described by way of example only and with reference to the accompany drawing, the single Figure of which is a flow chart of an embodiment of a material drying and pyrolyzing method of this invention.

Referring to the drawing, in an embodiment of this invention, the material drying and pyrolyzing method 100 includes the steps of 101 ~ 104.

In step 101, send the material into the rotary kettle;
In an embodiment of this invention, the lifting and feeding mechanism is used to convey the material into the rotary kettle.

In step 102, heat the material inside the rotary kettle to achieve the pyrolyzing and separating of the material using high-power microwave energy, in order to get the decomposed gas and solid substances.

In an embodiment of this invention, the rotary kettle is internally equipped with the spiral blade, which can stir and rotate the material in the rotary kettle, to make them uniformly heated, and it also can convey the material to the discharging outlet and adjust the microwave's field intensity distribution in the cavity, to make the microwave to more uniformly effect on the material.

Furthermore, in an embodiment of this invention, the height of the spiral blade is 1 mm to 500 mm, and the thickness of the spiral blade is 2 mm to 50 mm, and the angle of the blade can be adjusted when used, to make the electric field distribution of the material more uniform.

In an embodiment of this invention, the heating temperature of the material is 200°C∼ 1000°C.

In an embodiment of this invention, the heating method of the microwave energy is: the microwave generated by the microwave generator is conveyed via microwave waveguide into the rotary kettle to conduct internal heating of the material.

Furthermore, in an embodiment of this invention, the power of the microwave is greater or equal to 10KW.

In an embodiment of this invention, the rotary kettle is connected to the kiln head, and the rotary kettle is driven to rotate by a variable frequency motor, the rotary kettle can rotate in the positive and reverse directions under the drive of the variable frequency motor, to drive the material to move forward or backward by the spiral blade, so as to achieve the purpose of feeding from the kiln head and discharging from the kiln head, and the rotation speed may be adjustable from 1 r/min to 100 r/min.

In an embodiment of this invention, the internal surface of the rotary kettle is sprayed and coated with high-temperature resistance non-stick material, to prevent oil-containing material from adhering on the internal surface of the rotary kettle, to improve the heating efficiency.

In step 103, condense and recycle the gas generated from decomposing.
In an embodiment of this invention, the decomposed gas enters the condensing and recycling unit for condensing and recovering.

In step 104, recycle and dispose the solid substance generated by pyrolyzing.

## Claims

1. A material drying and pyrolyzing method, which is **characterized in that**, including:
sending the material into the rotary kettle;
making use of the microwave energy to heat the materials within the rotary kettle to pyrolyze and decompose the material, in order to get decomposed gas and solid substance;
condensing and recycling the gas;
recycling and disposing the solid substance.

2. The method of claim 1, wherein said rotary kettle is internally equipped with spiral blade.

3. The method of claim 1 or 2, wherein the heating temperature of the material is 200°C∼1000°C.

4. The method of claim 1 or 2, wherein the heating method using microwave energy is: a microwave generator generates microwave and the microwave is conveyed via a microwave tube into the rotary kettle to conduct internal heating of the material.

5. The method of claim 4, wherein the power of the microwave ≥10KW.

6. The method of claim 2, wherein the height of the spiral blade is 1mm∼500mm and the thickness of the spiral blade is 2mm∼50mm.
